# EUROPEAN PATENT APPLICATION

(11) **EP 3 910 853 A1**
(43) Date of publication of application: **17.11.2021**
(21) Application number: 20739026.1
(22) Date of filing: 07.01.2020
(51) Int. Cl.: H04L 5/00

(54) **INFORMATION TRANSMISSION METHOD, TERMINAL, AND NETWORK DEVICE**

(30) Priority: 11.01.2019 CN 201910028264
(71) Applicant: Datang Mobile Communications Equipment Co., Ltd., Beijing 100083 (CN)
(72) Inventor: GAO, Xuejuan, Beijing 100191 (CN); EKPENYONG, Tony, Beijing 100191 (CN)
(74) Representative: Studio Torta S.p.A.
(86) International application number: PCT/CN2020/070647
(87) International publication number: WO 2020/143608

(57) **Abstract**

An information transmission method, a terminal and a network device are provided. The information transmission method includes: in the case that a first uplink channel carrying first UCI overlaps a second uplink channel carrying second UCI in time domain, determining a third uplink channel for multiplexing transmission of the first UCI and the second UCI; judging whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, dropping the second UCI, and transmitting the first UCI on the first uplink channel.

## Description

### CROSS-REFERENCE TO RELATED APPLICATION

This application claims a priority of the Chinese patent application No.201910028264.0 filed in China on January 11, 2019, the entire contents of which are incorporated herein by reference.

### TECHNICAL FIELD

The present disclosure relates to the field of communication application, in particular to an information transmission method, a terminal and a network device.

### BACKGROUND

In Release 16 (R16) Ultra Reliable & Low Latency Communication (URLLC), the transmission of more than one Physical Uplink Control Channel (PUCCH) carrying Hybrid Automatic Repeat reQuest Acknowledgement (HARQ-ACK) within one slot is supported, so as to support a lower feedback delay. When a terminal supports enhanced Mobile Broadband (eMBB) and URLLC services simultaneously, an uplink channel determined in accordance with a transmission mechanism of URLLC Uplink Control Information (UCI) and carrying the URLLC UCI may probably overlap an uplink channel determined in accordance with a transmission mechanism of eMBB UCI and carrying the eMBB UCI. At this time, a PUCCH resource determined in accordance with a multiplexing rule in related art and carrying the HARQ-ACK lags behind an original PUCCH resource carrying the HARQ-ACK, leading to an increase in the feedback delay of the URLLC HARQ-ACK. There is currently no definite method about how to solve this problem.

### SUMMARY

An object of the present disclosure is to provide an information transmission method, a terminal and a network device, so as to solve the problem that the UCI transmission delay increases when resources for two uplink channels carrying the UCI overlap each other and the UCI is transmitted in the multiplexing manner using the multiplexing rule in the related art.

In one aspect, the present disclosure provides in some embodiments an information transmission method for a terminal, including: in the case that a first uplink channel carrying first UCI overlaps a second uplink channel carrying second UCI in a time domain, determining a third uplink channel for multiplexing transmission of the first UCI and the second UCI; judging whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, dropping the second UCI, and transmitting the first UCI on the first uplink channel.

In a possible embodiment of the present disclosure, subsequent to judging whether the starting position and/or the ending position of the third uplink channel is later than the starting position and/or the ending position of the first uplink channel by the predetermined time, the information transmission method further includes, when it is judged that the starting position and/or the ending position of the third uplink channel is not later than the starting position and/or the ending position of the first uplink channel by the predetermined time, transmitting the first UCI and the second UCI on the third uplink channel, or transmitting the first UCI on the third uplink channel.

In a possible embodiment of the present disclosure, the third uplink channel is the first uplink channel or the second uplink channel, or the third uplink channel is an uplink channel other than the first uplink channel and the second uplink channel.

In a possible embodiment of the present disclosure, a type of the first UCI is same as or different from a type of the second UCI.

In a possible embodiment of the present disclosure, a priority level of the first UCI is higher than a priority level of the second UCI, or a significance level of the first UCI is higher than a significance level of the second UCI; or the first UCI is UCI corresponding to a first service type, the second UCI is UCI corresponding to a second service type, and a priority level of the first service type is higher than a priority level of the second service type or a significance level of the first service type is higher than a significance level of the second service type; or the first UCI and the second UCI have different priority levels or significance levels in a same service type.

In a possible embodiment of the present disclosure, the priority levels of the first service type and the second service type are determined in accordance with target information, or the priority levels of the first UCI and the second UCI are determined in accordance with target information. The target information includes at least one of a DCI format, a DCI size, a search space, a Control Resource Set (CORESET), a beam, a Radio Network Temporary Identity (RNTI), a Modulation and Coding Scheme (MCS) or Channel Quality Indicator (CQI) table, a target Block Error Rate (BLER), and a priority level identity.

In a possible embodiment of the present disclosure, the third uplink channel is at least one of a PUCCH or a Physical Uplink Shared Channel (PUSCH).

In a possible embodiment of the present disclosure, the predetermined time is a first predetermined quantity of Orthogonal Frequency Division Multiplexing (OFDM) symbols, or a time length corresponding to the first predetermined quantity of OFDM symbols, or a duration corresponding to a second predetermined quantity of time units.

In another aspect, the present disclosure provides in some embodiments an information transmission method for a network device, including: in the case that a first uplink channel carrying first UCI overlaps a second uplink channel carrying second UCI in a time domain, determining a third uplink channel for multiplexing transmission of the first UCI and the second UCI; judging whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, not receiving the second UCI, and receiving the first UCI on the first uplink channel.

In a possible embodiment of the present disclosure, subsequent to judging whether the starting position and/or the ending position of the third uplink channel is later than the starting position and/or the ending position of the first uplink channel by the predetermined time, the information transmission method further includes, when it is judged that the starting position and/or the ending position of the third uplink channel is not later than the starting position and/or the ending position of the first uplink channel by the predetermined time, receiving the first UCI and the second UCI on the third uplink channel, or receiving the first UCI on the third uplink channel.

In a possible embodiment of the present disclosure, the third uplink channel is the first uplink channel or the second uplink channel, or the third uplink channel is an uplink channel other than the first uplink channel and the second uplink channel.

In a possible embodiment of the present disclosure, a type of the first UCI is same as or different from a type of the second UCI.

In a possible embodiment of the present disclosure, a priority level of the first UCI is higher than a priority level of the second UCI, or a significance level of the first UCI is higher than a significance level of the second UCI; or the first UCI is UCI corresponding to a first service type, the second UCI is UCI corresponding to a second service type, and a priority level of the first service type is higher than a priority level of the second service type or a significance level of the first service type is higher than a significance level of the second service type; or the first UCI and the second UCI have different priority levels or significance levels in a same service type.

In a possible embodiment of the present disclosure, the priority levels of the first service type and the second service type are determined in accordance with target information, or the priority levels of the first UCI and the second UCI are determined in accordance with target information. The target information includes at least one of a DCI format, a DCI size, a search space, a CORESET, a beam, an RNTI, an MCS or CQI table, a target BLER, and a priority level identity. In a possible embodiment of the present disclosure, the third uplink channel is at least one of a PUCCH or a PUSCH.

In a possible embodiment of the present disclosure, the predetermined time is a first predetermined quantity of OFDM symbols, or a time length corresponding to the first predetermined quantity of OFDM symbols, or a duration corresponding to a second predetermined quantity of time units.

In yet another aspect, the present disclosure provides in some embodiments a terminal, including a transceiver, a memory, a processor, and a program stored in the memory and executed by the processor. The processor is configured to execute the program so as to: in the case that a first uplink channel carrying first UCI overlaps a second uplink channel carrying second UCI in a time domain, determine a third uplink channel for multiplexing transmission of the first UCI and the second UCI; judge whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, drop the second UCI, and transmit the first UCI on the first uplink channel.

In a possible embodiment of the present disclosure, the processor is further configured to execute the program to, when it is judged that the starting position and/or the ending position of the third uplink channel is not later than the starting position and/or the ending position of the first uplink channel by the predetermined time, transmit the first UCI and the second UCI on the third uplink channel, or transmit the first UCI on the third uplink channel.

In a possible embodiment of the present disclosure, the third uplink channel is the first uplink channel or the second uplink channel, or the third uplink channel is an uplink channel other than the first uplink channel and the second uplink channel.

In a possible embodiment of the present disclosure, a type of the first UCI is same as or different from a type of the second UCI.

In a possible embodiment of the present disclosure, a priority level of the first UCI is higher than a priority level of the second UCI, or a significance level of the first UCI is higher than a significance level of the second UCI; or the first UCI is UCI corresponding to a first service type, the second UCI is UCI corresponding to a second service type, and a priority level of the first service type is higher than a priority level of the second service type or a significance level of the first service type is higher than a significance level of the second service type; or the first UCI and the second UCI have different priority levels or significance levels in a same service type.

In a possible embodiment of the present disclosure, the priority levels of the first service type and the second service type are determined in accordance with target information, or the priority levels of the first UCI and the second UCI are determined in accordance with target information. The target information includes at least one of a DCI format, a DCI size, a search space, a CORESET, a beam, an RNTI, an MCS or CQI table, a target BLER, and a priority level identity. In a possible embodiment of the present disclosure, the third uplink channel is at least one of a PUCCH or a PUSCH.

In a possible embodiment of the present disclosure, the predetermined time is a first predetermined quantity of OFDM symbols, or a time length corresponding to the first predetermined quantity of OFDM symbols, or a duration corresponding to a second predetermined quantity of time units.

In still yet another aspect, the present disclosure provides in some embodiments a computer-readable storage medium storing therein a computer program. The computer program is executed by a processor so as to implement the above-mentioned information transmission method for the terminal.

In still yet another aspect, the present disclosure provides in some embodiments a network device, including a transceiver, a memory, a processor, and a program stored in the memory and executed by the processor. The processor is configured to execute the program so as to: in the case that a first uplink channel carrying first UCI overlaps a second uplink channel carrying second UCI in a time domain, determine a third uplink channel for multiplexing transmission of the first UCI and the second UCI; judge whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, not receive the second UCI, and receive the first UCI on the first uplink channel.

In a possible embodiment of the present disclosure, the processor is further configured to execute the program to, when it is judged that the starting position and/or the ending position of the third uplink channel is not later than the starting position and/or the ending position of the first uplink channel by the predetermined time, receive the first UCI and the second UCI on the third uplink channel, or receive the first UCI on the third uplink channel.

In a possible embodiment of the present disclosure, the third uplink channel is the first uplink channel or the second uplink channel, or the third uplink channel is an uplink channel other than the first uplink channel and the second uplink channel.

In a possible embodiment of the present disclosure, a type of the first UCI is same as or different from a type of the second UCI.

In a possible embodiment of the present disclosure, a priority level of the first UCI is higher than a priority level of the second UCI, or a significance level of the first UCI is higher than a significance level of the second UCI; or the first UCI is UCI corresponding to a first service type, the second UCI is UCI corresponding to a second service type, and a priority level of the first service type is higher than a priority level of the second service type or a significance level of the first service type is higher than a significance level of the second service type; or the first UCI and the second UCI have different priority levels or significance levels in a same service type.

In a possible embodiment of the present disclosure, the priority levels of the first service type and the second service type are determined in accordance with target information, or the priority levels of the first UCI and the second UCI are determined in accordance with the target information. The target information includes at least one of a DCI format, a DCI size, a search space, a CORESET, a beam, an RNTI, an MCS or CQI table, a target BLER, and a priority level identity.

In a possible embodiment of the present disclosure, the third uplink channel is at least one of a PUCCH or a PUSCH.

In a possible embodiment of the present disclosure, the predetermined time is a first predetermined quantity of OFDM symbols, or a time length corresponding to the first predetermined quantity of OFDM symbols, or a duration corresponding to a second predetermined quantity of time units.

In still yet another aspect, the present disclosure provides in some embodiments a computer-readable storage medium storing therein a computer program. The computer program is executed by a processor so as to implement the above-mentioned information transmission method for the network device.

In still yet another aspect, the present disclosure provides in some embodiments a terminal, including: a first determination module configured to, in the case that a first uplink channel carrying first UCI overlaps a second uplink channel carrying second UCI in a time domain, determine a third uplink channel for multiplexing transmission of the first UCI and the second UCI; a first judgment module configured to judge whether a starting position and/or an ending position of the third uplink channel is later than a starting position and/or an ending position of the first uplink channel by a predetermined time; and a first transmission module configured to, when the first judgment module judges that the starting position and/or the ending position of the third uplink channel is later than the starting position and/or the ending position of the first uplink channel by the predetermined time, drop the second UCI, and transmit the first UCI on the first uplink channel.

In a possible embodiment of the present disclosure, the terminal further includes a second transmission module configured to, when the first judgment module judges that the starting position and/or the ending position of the third uplink channel is not later than the starting position and/or the ending position of the first uplink channel by the predetermined time, transmit the first UCI and the second UCI on the third uplink channel, or transmit the first UCI on the third uplink channel.

In still yet another aspect, the present disclosure provides in some embodiments a network device, including: a second determination module configured to, in the case that a first uplink channel carrying first UCI overlaps a second uplink channel carrying second UCI in a time domain, determining a third uplink channel for multiplexing transmission of the first UCI and the second UCI; a second judgment module configured to judge whether a starting position and/or an ending position of the third uplink channel is later than a starting position and/or an ending position of the first uplink channel by a predetermined time; and a first reception module configured to, when the second judgment module judges that the starting position and/or the ending position of the third uplink channel is later than the starting position and/or the ending position of the first uplink channel by the predetermined time, not receive the second UCI, and receive the first UCI on the first uplink channel.

In a possible embodiment of the present disclosure, the network device further includes a second reception module configured to, when the second judgment module judges that the starting position and/or the ending position of the third uplink channel is not later than the starting position and/or the ending position of the first uplink channel by the predetermined time, receive the first UCI and the second UCI on the third uplink channel, or receive the first UCI on the third uplink channel.

The present disclosure has the following beneficial effects.

According to the embodiments of the present disclosure, in the case that the first uplink channel carrying the first UCI overlaps the second uplink channel carrying the second UCI in the time domain, the third uplink channel for transmitting the first UCI and the second UCI in the multiplexing manner may be determined. Whether the starting position and/or the ending position of the third uplink channel is later than the starting position and/or the ending position of the first uplink channel by the predetermined time may be judged. When the judgment result is yes, the second UCI may be dropped and the first UCI may be transmitted on the first uplink channel. As a result, it is able to ensure the transmission delay of the UCI with a high priority level or a high significance level.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
Fig.1 is a schematic view showing the multiplexing transmission when PUCCHs carrying different UCI overlap each other;
Fig.2 is another schematic view showing the multiplexing transmission when the PUCCHs carrying different UCI overlap each other;
Fig.3 is yet another schematic view showing the multiplexing transmission when the PUCCHs carrying different UCI overlap each other;
Fig.4 is a flow chart of an information transmission method according to an embodiment of the present disclosure;
Fig.5 is a flow chart of another information transmission method according to an embodiment of the present disclosure;
Fig.6 is a schematic view showing the transmission when PUCCHs carrying different UCI overlap each other according to an embodiment of the present disclosure;
Fig.7 is another schematic view showing the transmission when the PUCCHs carrying different UCI overlap each other according to an embodiment of the present disclosure;
Fig.8 is yet another schematic view showing the transmission when the PUCCHs carrying different UCI overlap each other according to an embodiment of the present disclosure;
Fig.9 is still yet another schematic view showing the transmission when the PUCCHs carrying different UCI overlap each other according to an embodiment of the present disclosure;
Fig.10 is a block diagram of a terminal according to an embodiment of the present disclosure;
Fig. 11 is a schematic view showing modules of the terminal according to an embodiment of the present disclosure;
Fig. 12 is a block diagram of a network device according to an embodiment of the present disclosure; and
Fig. 13 is a schematic view showing modules of the network device according to an embodiment of the present disclosure.

### DETAILED DESCRIPTION

In order to make the objects, the technical solutions and the advantages of the present disclosure more apparent, the present disclosure will be described hereinafter in details in conjunction with the drawings and embodiments.

To facilitate the understanding of the technical solutions in the embodiments of the present disclosure, the following description will be given at first.

DCI at least includes ah HARQ-ACK, Channel State Information (CSI) and a Scheduling Request (SR). The HARQ-ACK may be used to determine a time-domain position of transmission in accordance with a dynamic feedback sequence or a fixed feedback sequence (including a slot and a position of a symbol within the slot). The so-called dynamic feedback sequence is a spacing between a slot where downlink transmission is performed and a slot where its HARQ-ACK feedback information is transmitted, the dynamic feedback sequence is indicated in an indication field in the DCI for scheduling the downlink transmission, and one of a plurality of PUCCH resources preconfigured through high-layer signaling is determined as a specific position of the symbol within the slot in accordance with the indication field in the DCI. The so-called fixed feedback sequence is a value of a spacing between a slot where the downlink transmission is performed and a slot where its HARQ-ACK feedback information is transmitted, and the fixed feedback sequence is directly configured through high-layer signaling. Regardless of the dynamic feedback sequence or the fixed feedback sequence, the slot where the HARQ-ACK feedback is located is determined in accordance with an ending position of the slot there the downlink transmission is performed. When the downlink transmission is dynamically scheduled, the slot where the HARQ-ACK feedback is located may change dynamically along with the downlink transmission.

Transmission resources for the CSI and the SR on the PUCCH are pre-configured through high-layer signaling, and the CSI and the SR are transmitted periodically in accordance with a transmission opportunity determined on the basis of a preconfigured period and a preconfigured offset, so a time-domain position of each of the CSI and the SR is relatively fixed. A transmission period of one CSI report is not shorter than one slot, but there may exist different CSI reports within one slot. A shortest transmission period of one SR configuration may include 2 symbols, so a plurality of SR transmission periods for a same SR configuration may exist within one slot. In addition, a plurality of SR configurations may be configured, and a transmission period and an offset of each SR configuration may be configured independently. Hence, there may exist a plurality of transmission opportunities for the plurality of SR configurations in a Time Division Multiplexing (TDM) mode within one slot.

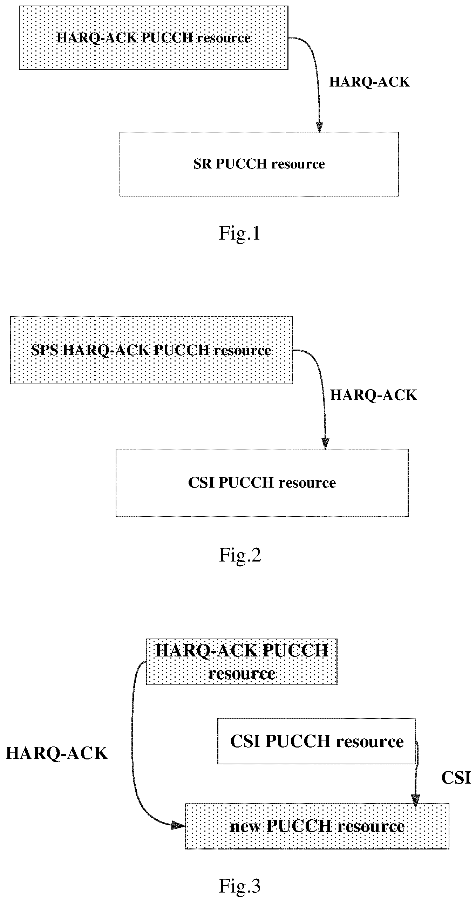

In a New Radio (NR) R15 system, when time-domain resources for PUCCHs carrying different UCI overlap each other, a multiplexing transmission rule for different UCI has been defined. For example, when a PUCCH carrying an HARQ-ACK overlaps a PUCCH carrying an SR, and both the PUCCH carrying the HARQ-ACK and the PUCCH carrying the SR are in a format 1, the HARQ-ACK is transferred to and transmitted on a PUCCH resource corresponding to the HARQ-ACK in the case that the SR is negative, so as to implicitly indicate that the SR is negative. When the SR is positive, as shown in Fig., the HARQ-ACK is transmitted on a PUCCH resource corresponding to the SR, so as to implicitly indicate the concurrence of the positive SR. For another example, when a PUCCH carrying a Semi-Persistent Scheduling (SPS) HARQ-ACK (i.e., an HARQ-ACK corresponding an SPS Physical Downlink Shared Channel (PDSCH)) overlaps a PUCCH carrying CSI, as shown in Fig.2, the SPS HARQ-ACK is transferred to a PUCCH resource corresponding to the CSI, so as to enable multiplexing transmission of the SPS HARQ-ACK and the CSI. For yet another example, when a PUCCH carrying a dynamic HARQ-ACK (i.e., an HARQ-ACK corresponding to a PDSCH having corresponding DCI scheduling) overlaps a PUCCH carrying CSI, and more than one slot has been configured for a PUCCH resource set, as shown in Fig.3, one set is selected from the configured PUCCH resource sets in accordance with the quantity of bits of the HARQ-ACK and the CSI, and then a PUCCH resource is determined from the selected set in accordance with a PUCCH resource indication field in the DCI for scheduling the PDSCH, so as to carry the HARQ-ACK and the CSI simultaneously.

However, in R16 URLLC, when an uplink channel determined in accordance with a transmission mechanism of URLLC UCI and carrying the URLLC UCI overlaps an uplink channel determined in accordance with a transmission mechanism of eMBB UCI and carrying the eMBB UCI, and the UCI is transmitted using the multiplexing rule in the related art in the multiplexing manner, the UCI transmission delay may increase.

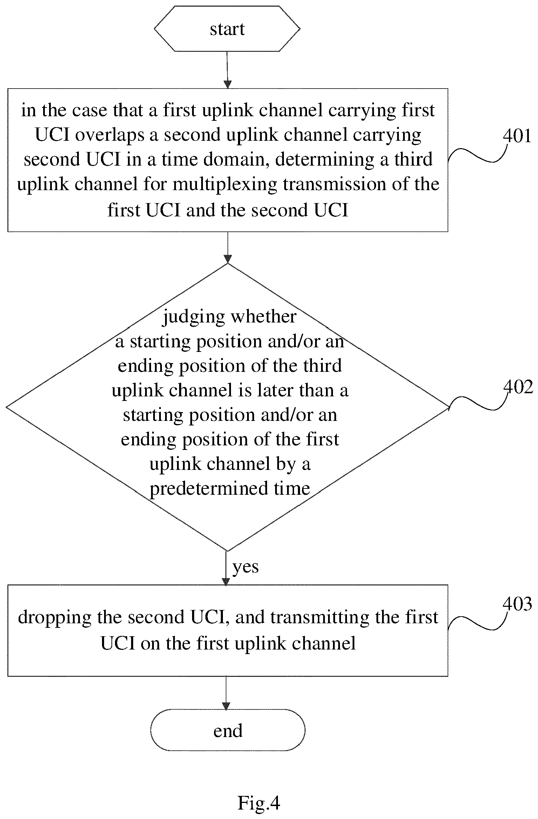

Based on the above, as shown in Fig.4, the present disclosure provides in some embodiments an information transmission method for a terminal, which includes the following steps.

Step 401: in the case that a first uplink channel carrying first UCI overlaps a second uplink channel carrying second UCI in a time domain, determining a third uplink channel for multiplexing transmission of the first UCI and the second UCI.

The third uplink channel may be the first uplink channel or the second uplink channel, or the third uplink channel may be an uplink channel other than the first uplink channel and the second uplink channel.

In the embodiments of the present disclosure, the third uplink channel may be an uplink channel determined in accordance with the UCI multiplexing rule of the related art. When the PUCCHs carrying different UCI overlap each other, the third uplink channel determined in accordance with the UCI multiplexing rule may be one of the first uplink channel and the second uplink channel, or a new uplink channel, depending on the kinds of the UCI and the formats of the PUCCHs being overlapped. The third uplink channel may be at least one of a PUCCH and a PUSCH. In other words, when the PUCCHs overlap each other, the determined third uplink channel may be still the PUCCH, and when the PUCCH overlaps the PUSCH, the determined third uplink channel may be the PUSCH.

Step 402: judging whether a starting position and/or an ending position of the third uplink channel is later than a starting position and/or an ending position of the first uplink channel by a predetermined time.

The predetermined time may be a first predetermined quantity of OFDM symbols, a time length corresponding to the first predetermined quantity of OFDM symbols, or a duration corresponding to a second predetermined quantity of time units.

For example, when the predetermined time is a time length, a unit of the time length may be specifically millisecond. At this time, the time length may be calculated in accordance with a reference subcarrier spacing, or one of a plurality of subcarrier spacings selected in accordance with a predetermined rule. To be specific, the plurality of subcarrier spacings may include at least two of a subcarrier spacing corresponding to a PDSCH, a subcarrier spacing corresponding to a PDCCH, a subcarrier spacing corresponding to a PUCCH, and a subcarrier spacing corresponding to a PUSCH.

For example, the predetermined time may be greater than or equal to 0. When the predetermined time is equal to 0, it means that the starting position and/or the ending position of the third uplink channel is aligned with, i.e., the same as, the starting position and/or the ending position of the first uplink channel.

For example, there may exist one or more predetermined times. When it is necessary to judge whether two positions meet the predetermined times simultaneously, the predetermined times for different positions may be the same or different.

In the embodiments of the present disclosure, the judging whether the starting position and/or the ending position of the third uplink channel is later than the starting position and/or the ending position of the first uplink channel by the predetermined time may include: judging whether the starting position of the third uplink channel is later than the starting position of the first uplink channel by the predetermined time; or judging whether the ending position of the third uplink channel is later than the ending position of the first uplink channel by the predetermined time; or judging whether the ending position of the third uplink channel is later than the starting position of the first uplink channel by the predetermined time; or judging whether the starting position of the third uplink channel is later than the ending position of the first uplink channel by the predetermined time; or judging whether the starting position of the third uplink channel is later than the starting position of the first uplink channel by the predetermined time and judging whether the ending position of the third uplink channel is later than the ending position of the first uplink channel by the predetermined time. Here, the predetermined time for judging the starting position may be the same as, or different from, the predetermined time for judging the ending position.

Step 403: when it is judged that the starting position and/or the ending position of the third uplink channel is later than the starting position and/or the ending position of the first uplink channel by the predetermined time, dropping the second UCI, and transmitting the first UCI on the first uplink channel.

Here, when the starting position and/or the ending position of the third uplink channel is later than the starting position and/or the ending position of the first uplink channel by the predetermined time, the starting position and/or the ending position of the third uplink channel may be located after the starting position and/or the ending position of the first uplink channel, and a time interval between the starting position and/or the ending position of the third uplink channel and the starting position and/or the ending position of the first uplink channel may be greater than the predetermined time.

The first UCI may be of a type identical to or different from the second UCI. For example, they may both be SRs, CSI, or HARQ-ACKs; or one of them may be an HARQ-ACK and the other may be an SR or CSI; or one of them may be CSI and the other may be an SR.

Here, the first UCI may have a priority level or a significance level higher than the second UCI. Alternatively, the first UCI may be UCI corresponding to a first service type, the second UCI may be UCI corresponding to a second service type, and the first service type may have a priority level or a significance level higher than the second service type. For example, the first UCI may be UCI corresponding to URLLC, and the second UCI may be UCI corresponding to eMBB.

Alternatively, the first UCI and the second UCI may be UCI having different priority levels or significance levels in a same service type. For example, the first UCI may be an HARQ-ACK corresponding to URLLC, and the second UCI may be CSI and/or an SR corresponding to URLLC.

Subsequent to judging whether the starting position and/or the ending position of the third uplink channel is later than the starting position and/or the ending position of the first uplink channel by the predetermined time, the information transmission method may further include, when it is judged that the starting position and/or the ending position of the third uplink channel is not later than the starting position and/or the ending position of the first uplink channel by the predetermined time, transmitting the first UCI and the second UCI on the third uplink channel, or transmitting the first UCI on the third uplink channel.

Here, when the first UCI is transmitted on the third uplink channel, the second UCI may be transmitted in an implicit manner. For example, when the transmission is performed on the third uplink channel, it may implicitly indicate that there also exists the second UCI.

In the embodiments of the present disclosure, the priority levels of the first service type and the second service type may be determined in accordance with target information, or the priority levels of the first UCI and the second UCI may be determined in accordance with the target information. The target information may include at least one of a DCI format, a DCI size, a search space, a CORESET, a beam, an RNTI, an MCS or CQI table, a target BLER, and a priority level identity.

For example, the first service type or first UCI may correspond to a first DCI format, and the second service type or second UCI may correspond to a second DCI format. It may be specified in advance that a service type corresponding to the first DCI format has a priority level higher than a service type corresponding to the second DCI format, or that UCI corresponding to the first DCI format has a priority level higher than UCI corresponding to the second DCI format. Hence, based on the corresponding DCI format, it may determine that the priority level of the first service type is higher than that of the second service type, or the priority level of the first UCI is higher than that of the second UCI.

For another example, the first service type or first UCI may correspond to a first RNTI, and the second service type or second UCI may correspond to a second RNTI. It may be specified in advance that a service type corresponding to the first RNTI has a priority level higher than a service type corresponding to the second RNTI, or that UCI corresponding to the first RNTI (i.e., corresponding downlink transmission is scrambled with the first RNTI) has a priority level higher than UCI corresponding to the second RNTI. Based on the corresponding RNTI, it may be determined that the priority level of the first service type is higher than that of the second service type, or the priority level of the first UCI is higher than that of the second UCI.

For yet another example, DCI corresponding to the first service type or first UCI may be transmitted in a first CORESET or a first search space, and DCI corresponding to the second service type or second UCI may be transmitted in a second CORESET or a second search space. It may be specified in advance that a service type corresponding to the first CORESET or the first search space has a priority level higher than a service type corresponding to the second CORESET or the second search space, or that UCI corresponding to the first CORESET or the first search space (i.e., scheduling information about the UCI is transmitted in the first CORESET or the first search space) has a priority level higher than UCI corresponding to the second CORESET or the second search space. Based on the corresponding CORESET or the corresponding search space, it may be determined that the priority level of the first service type is higher than that of the second service type, or the priority level of the first UCI is higher than that of the second UCI.

For still yet another example, a target BLER corresponding to the first service type or first UCI may be 10-5 or 10-6, and a target BLRE corresponding to the second service type or the second UCI may be greater than 10-5 or 10-6 (e.g., 10-2 or 10-1). It may be specified in advance that a service type corresponding to the target BLER 10-5 or 10-6 has a priority level higher than a service type corresponding to the target BLER 10-2 or 10-1, or that UCI corresponding to the target BLER 10-5 or 10-6 has a priority level higher than UCI corresponding to the target BLER10-2 or 10-1. Based on the corresponding target BLER, it may be determined that the priority level of the first service type is higher than that of the second service type, or the priority level of the first UCI is higher than that of the second UCI.

For still yet another example, the first service type or first UCI may correspond to a URLLC CQI table (or an URLLC MCS table), and the second service type or second UCI may correspond to a 64-Quadrature Amplitude Modulation (QAM) or 256-QAM CQI table (or a 64-QAM or 256-QAM MCS table). It may be specified in advance that a service type corresponding to the URLLC CQI table has a priority level higher than a service type corresponding to the 64-QAM or 256-QAM CQI table, or that UCI corresponding to the URLLC CQI table has a priority level higher than UCI corresponding to the 64-QAM or 256-QAM CQI table. Based on the corresponding CQI tale, it may be determined that the priority level of the first service type is higher than that of the second service type, or the priority level of the first UCI is higher than that of the second UCI.

According to the information transmission method in the embodiments of the present disclosure, in the case that the first uplink channel carrying the first UCI overlaps the second uplink channel carrying the second UCI in the time domain, the third uplink channel for multiplexing transmission of the first UCI and the second UCI may be determined. Whether the starting position and/or the ending position of the third uplink channel is later than the starting position and/or the ending position of the first uplink channel by the predetermined time may be judged. When the judgment result is yes, the second UCI may be dropped, and the first UCI may be transmitted on the first uplink channel. As a result, it is able to ensure the transmission delay of the UCI with a high priority level or a high significance level.

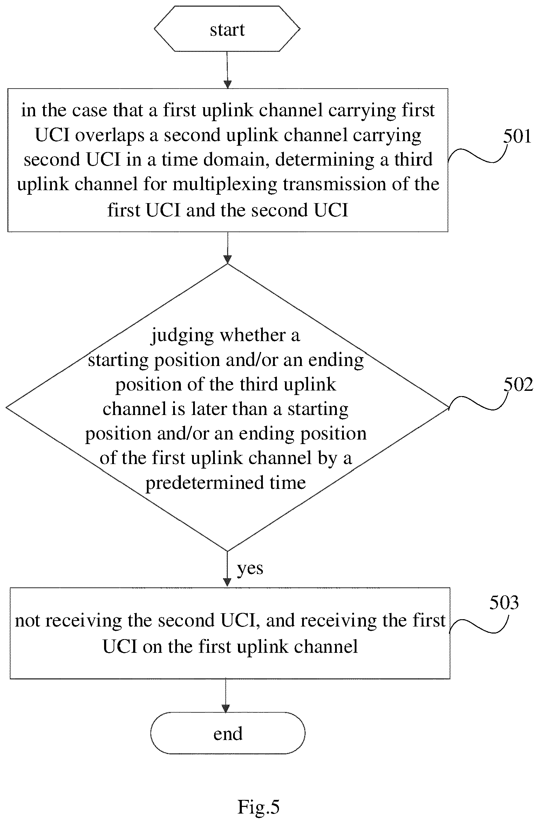

As shown in Fig.5, the present disclosure further provides in some embodiments an information transmission method for a network device, which includes the following steps.

Step 501: in the case that a first uplink channel carrying first UCI overlaps a second uplink channel carrying second UCI in a time domain, determining a third uplink channel for multiplexing transmission of the first UCI and the second UCI.

The third uplink channel may be the first uplink channel or the second uplink channel, or the third uplink channel may be an uplink channel other than the first uplink channel and the second uplink channel.

In the embodiments of the present disclosure, the third uplink channel may be an uplink channel determined in accordance with the UCI multiplexing rule of the related art. When the PUCCHs carrying different UCI overlap each other, the third uplink channel determined in accordance with the UCI multiplexing rule may be one of the first uplink channel and the second uplink channel, or a new uplink channel, depending on the kinds of the UCI and the formats of the PUCCHs being overlapped. The third uplink channel may be at least one of a PUCCH and a PUSCH. In other words, when the PUCCHs overlap each other, the determined third uplink channel may be still the PUCCH, and when the PUCCH overlaps the PUSCH, the determined third uplink channel may be the PUSCH.

Step 502: judging whether a starting position and/or an ending position of the third uplink channel is later than a starting position and/or an ending position of the first uplink channel by a predetermined time.

The predetermined time may be a first predetermined quantity of OFDM symbols, or a time length corresponding to the first predetermined quantity of OFDM symbols, or a duration corresponding to a second predetermined quantity of time units.

For example, when the predetermined time is a time length, a unit of the time length may be specifically millisecond. At this time, the time length may be calculated in accordance with a reference subcarrier spacing, or one of a plurality of subcarrier spacings selected in accordance with a predetermined rule. To be specific, the plurality of subcarrier spacings may include at least two of a subcarrier spacing corresponding to a PDSCH, a subcarrier spacing corresponding to a PDCCH, a subcarrier spacing corresponding to a PUCCH, and a subcarrier spacing corresponding to a PUSCH.

For example, the predetermined time may be greater than or equal to 0. When the predetermined time is equal to 0, it means that the starting position and/or the ending position of the third uplink channel is aligned with, i.e., the same as, the starting position and/or the ending position of the first uplink channel.

For example, there may exist one or more predetermined times. When it is necessary to judge whether two positions meet the predetermined times, the predetermined times for different positions may be the same or different.

In the embodiments of the present disclosure, the judging whether the starting position and/or the ending position of the third uplink channel is later than the starting position and/or the ending position of the first uplink channel by the predetermined time may include: judging whether the starting position of the third uplink channel is later than the starting position of the first uplink channel by the predetermined time; or judging whether the ending position of the third uplink channel is later than the ending position of the first uplink channel by the predetermined time; or judging whether the ending position of the third uplink channel is later than the starting position of the first uplink channel by the predetermined time; or judging whether the starting position of the third uplink channel is later than the ending position of the first uplink channel by the predetermined time; or judging whether the starting position of the third uplink channel is later than the starting position of the first uplink channel by the predetermined time and judging whether the ending position of the third uplink channel is later than the ending position of the first uplink channel by the predetermined time. Here, the predetermined time for judging the starting position may be the same as, or different from, the predetermined time for judging the ending position.

Step 503: when it is judged that the starting position and/or the ending position of the third uplink channel is later than the starting position and/or the ending position of the first uplink channel by the predetermined time, not receiving the second UCI, and receiving the first UCI on the first uplink channel.

Here, when the starting position and/or the ending position of the third uplink channel is later than the starting position and/or the ending position of the first uplink channel by the predetermined time, the starting position and/or the ending position of the third uplink channel may be located after the starting position and/or the ending position of the first uplink channel, and a time interval between the starting position and/or the ending position of the third uplink channel and the starting position and/or the ending position of the first uplink channel may be greater than the predetermined time.

The first UCI may be of a type identical to or different from the second UCI. For example, they may both be SRs, CSI, or HARQ-ACKs; or one of them may be an HARQ-ACK and the other may be an SR or CSI; or one of them may be CSI and the other may be an SR.

Here, the first UCI may have a priority level or a significance level higher than the second UCI. Alternatively, the first UCI may be UCI corresponding to a first service type, the second UCI may be UCI corresponding to a second service type, and the first service type may have a priority level or a significance level higher than the second service type. For example, the first UCI may be UCI corresponding to URLLC, and the second UCI may be UCI corresponding to eMBB.

Alternatively, the first UCI and the second UCI may be UCI having different priority levels or significance levels in a same service type. For example, the first UCI may be an HARQ-ACK corresponding to URLLC, and the second UCI may be CSI and/or an SR corresponding to URLLC.

Subsequent to judging whether the starting position and/or the ending position of the third uplink channel is later than the starting position and/or the ending position of the first uplink channel by the predetermined time, the information transmission method may further include, when it is judged that the starting position and/or the ending position of the third uplink channel is not later than the starting position and/or the ending position of the first uplink channel by the predetermined time, receiving the first UCI and the second UCI on the third uplink channel, or receiving the first UCI on the third uplink channel.

Here, when the first UCI is received on the third uplink channel, the second UCI may be transmitted in an implicit manner. For example, when information has been received on the third uplink channel, it may implicitly indicate that there exists the second UCI simultaneously. In the embodiments of the present disclosure, the priority levels of the first service type and the second service type may be determined in accordance with target information, or the priority levels of the first UCI and the second UCI may be determined in accordance with the target information. The target information may include at least one of a DCI format, a DCI size, a search space, a CORESET, a beam, an RNTI, an MCS or CQI table, a target BLER, and a priority level identity.

For example, the first service type or first UCI may correspond to a first DCI format, and the second service type or second UCI may correspond to a second DCI format. It may be specified in advance that a service type corresponding to the first DCI format has a priority level higher than a service type corresponding to the second DCI format, or that UCI corresponding to the first DCI format has a priority level higher than UCI corresponding to the second DCI format. Hence, based on the corresponding DCI format, it may determine that the priority level of the first service type is higher than that of the second service type, or the priority level of the first UCI is higher than that of the second UCI.

For another example, the first service type or first UCI may correspond to a first RNTI, and the second service type or second UCI may correspond to a second RNTI. It may be specified in advance that a service type corresponding to the first RNTI has a priority level higher than a service type corresponding to the second RNTI, or that UCI corresponding to the first RNTI (i.e., corresponding downlink transmission is scrambled with the first RNTI) has a priority level higher than UCI corresponding to the second RNTI. Based on the corresponding RNTI, it may be determined that the priority level of the first service type is higher than that of the second service type, or the priority level of the first UCI is higher than that of the second UCI.

For yet another example, DCI corresponding to the first service type or first UCI may be transmitted in a first CORESET or a first search space, and DCI corresponding to the second service type or second UCI may be transmitted in a second CORESET or a second search space. It may be specified in advance that a service type corresponding to the first CORESET or the first search space has a priority level higher than a service type corresponding to the second CORESET or the second search space, or that UCI corresponding to the first CORESET or the first search space (i.e., scheduling information about the UCI is transmitted in the first CORESET or the first search space) has a priority level higher than UCI corresponding to the second CORESET or the second search space. Based on the corresponding CORESET or the corresponding search space, it may be determined that the priority level of the first service type is higher than that of the second service type, or the priority level of the first UCI is higher than that of the second UCI.

For still yet another example, a target BLER corresponding to the first service type or first UCI may be 10-5 or 10-6, and a target BLRE corresponding to the second service type or the second UCI may be greater than 10-5 or 10-6 (e.g., 10-2 or 10-1). It may be specified in advance that a service type corresponding to the target BLER 10-5 or 10-6 has a priority level higher than a service type corresponding to the target BLER 10-2 or 10-1, or that UCI corresponding to the target BLER 10-5 or 10-6 has a priority level higher than UCI corresponding to the target BLER10-2 or 10-1. Based on the corresponding target BLER, it may be determined that the priority level of the first service type is higher than that of the second service type, or the priority level of the first UCI is higher than that of the second UCI.

For still yet another example, the first service type or first UCI may correspond to a URLLC CQI table (or an URLLC MCS table), and the second service type or second UCI may correspond to a 64-QAM or 256-QAM CQI table (or a 64-QAM or 256-QAM MCS table). It may be specified in advance that a service type corresponding to the URLLC CQI table has a priority level higher than a service type corresponding to the 64-QAM or 256-QAM CQI table, or that UCI corresponding to the URLLC CQI table has a priority level higher than UCI corresponding to the 64-QAM or 256-QAM CQI table. Based on the corresponding CQI tale, it may be determined that the priority level of the first service type is higher than that of the second service type, or the priority level of the first UCI is higher than that of the second UCI. According to the information transmission method in the embodiments of the present disclosure, in the case that the first uplink channel carrying the first UCI overlaps the second uplink channel carrying the second UCI in the time domain, the third uplink channel for multiplexing transmission of the first UCI and the second UCI may be determined. Whether the starting position and/or the ending position of the third uplink channel is later than the starting position and/or the ending position of the first uplink channel by the predetermined time may be judged. When the judgment result is yes, the second UCI may not be received, and the first UCI may be received on the first uplink channel. As a result, it is able to ensure the transmission delay of the UCI with a high priority level or a high significance level.

The information transmission method will be described hereinafter in conjunction with the specific embodiments.

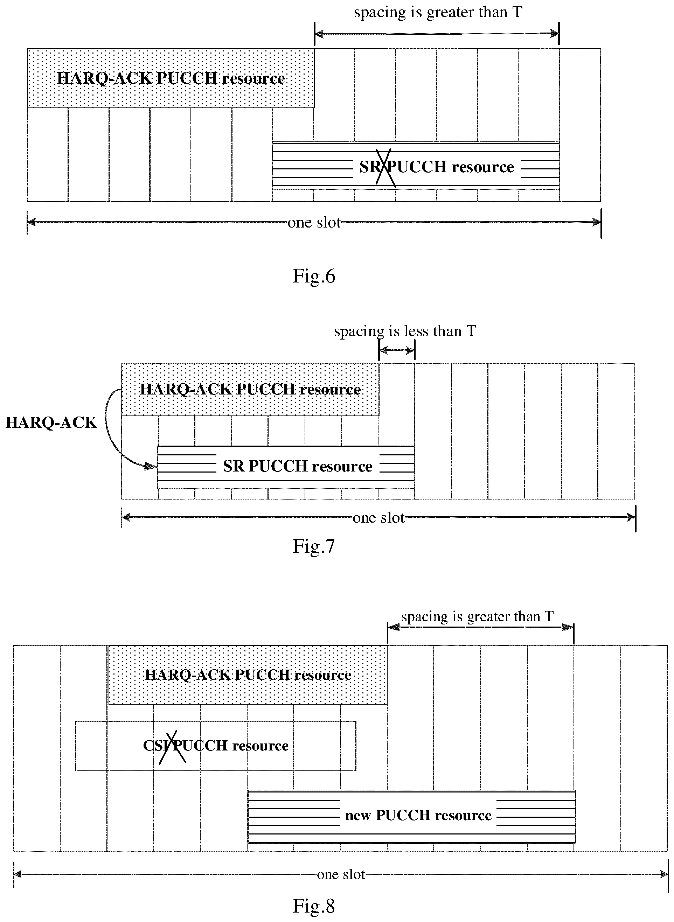

First embodiment: as shown in Figs.6 and 7, it is presumed that there exist two PUCCHs within one slot, and different PUCCHs carry different types of UCI. When it is determined, in accordance with such information as a format of DCI for scheduling downlink transmission, a DCI size, a search space where the transmission is performed, a COREST where the transmission is performed, a beam used for the transmission or an RNTI used for the transmission, that the downlink transmission corresponds to a URLLC service or has a higher priority level, it may be determined that the HARQ-ACK for the downlink transmission is first UCI, i.e., UCI having a higher priority level. Identically, when it is determined, in accordance with a configuration of a PUCCH resource or a configuration of an SR, that the SR corresponds to eMBB or has a lower priority level, it may be determined that the SR is second UCI, i.e., UCI having a lower priority level.

It is presumed that both the HARQ-ACK and the SR are transmitted in a PUCCH format 1. Because the two PUCCHs overlap each other in a time domain, when the SR is a positive SR, the HARQ-ACK needs to be transferred to and transmitted on a PUCCH resource corresponding to the SR on the basis of a UCI multiplexing transmission rule, i.e., the PUCCH resource corresponding to the SR may be a PUCCH resource for multiplexing transmission of the HARQ-ACK and the SR.

The terminal needs to make judgment as follows. The terminal may judge whether a last symbol of the PUCCH resource corresponding to the SR is later than a last symbol of a PUCCH resource corresponding to the original HARQ-ACK by T symbols, e.g., by two symbols. When a judgment result is yes, as shown in Fig.6, the SR may not be transmitted (i.e., the SR may be dropped), and the HARQ-ACK may be transmitted on the original PUCCH resource carrying the HARQ-ACK, so as to not increase the transmission delay of the UCI having a higher priority level. When the judgment result is no, as shown in Fig.7, the HARQ-ACK may be transferred to and transmitted on the PUCCH resource corresponding to the SR, so as to support the simultaneous transmission of the SR and the HARQ-ACK. The SR may be implicitly indicated through the transmission on the PUCCH resource corresponding to the SR.

It should be noted that, any other judgment modes, e.g., judging whether a first symbol of the PUCCH resource corresponding to the SR is later than a first symbol of the original PUCCH resource corresponding to the HARQ-ACK by T symbols, or judging whether the first symbol of the PUCCH resource corresponding to the SR is later than the last symbol of the original PUCCH resource corresponding to the HARQ-ACK by T symbols, or judging whether the last symbol of the PUCCH resource corresponding to the SR is later than the first symbol of the original PUCCH resource corresponding to the HARQ-ACK by T symbols, and replacing the T symbols with a corresponding time length, e.g., T1 milliseconds, may have a same principle as the above-mentioned judgment mode, and thus will not be particularly further defined herein. A consistent judgment mode for the terminal and a base station may be pre-agreed or specified in a protocol.

Through a same judgment method used by the terminal, the base station may judge whether the last symbol of the PUCCH resource corresponding to the SR is later than the last symbol of the original PUCCH resource corresponding to the HARQ-ACK by T symbols, and determine whether the HARQ-ACK is to be transferred to and transmitted on the SR resource in accordance with a judgment result. If not, the HARQ-ACK may be received merely on the PUCCH resource corresponding to the HARQ-ACK, and if yes, the base station needs to perform blind detection on the PUCCH resource corresponding to the HARQ-ACK and the PUCCH resource corresponding to the SR because the base station does not know whether the positive SR is transmitted from the terminal. When information has been detected on the PUCCH resource corresponding to the SR, the base station may determine that there exists the positive SR, and then receive the HARQ-ACK on the PUCCH resource corresponding to the SR. When no information has been detected on the PUCCH resource corresponding to the SR, the base station may determine that there exists no positive SR, and then receive the HARQ-ACK on the PUCCH resource corresponding to the HARQ-ACK.

In the first embodiment, when the HARQ-ACK is replaced with an SPS HARQ-ACK and the SR is replaced with CSI, the method may also be applied. A PUCCH format of the HARQ-ACK may be the same as, or different from, that mentioned in the first embodiment, a PUCCH format of the CSI may be a PUCCH format 2/3/4, and the other processings may be the same as that mentioned in the first embodiment. In the first embodiment, when a priority level of the SR is exchanged with a priority level of the HARQ-ACK and a PUCCH format changes, the method may also be applied, with such a difference that, when the judgment result is yes, the SR rather than the HARQ-ACK is transmitted.

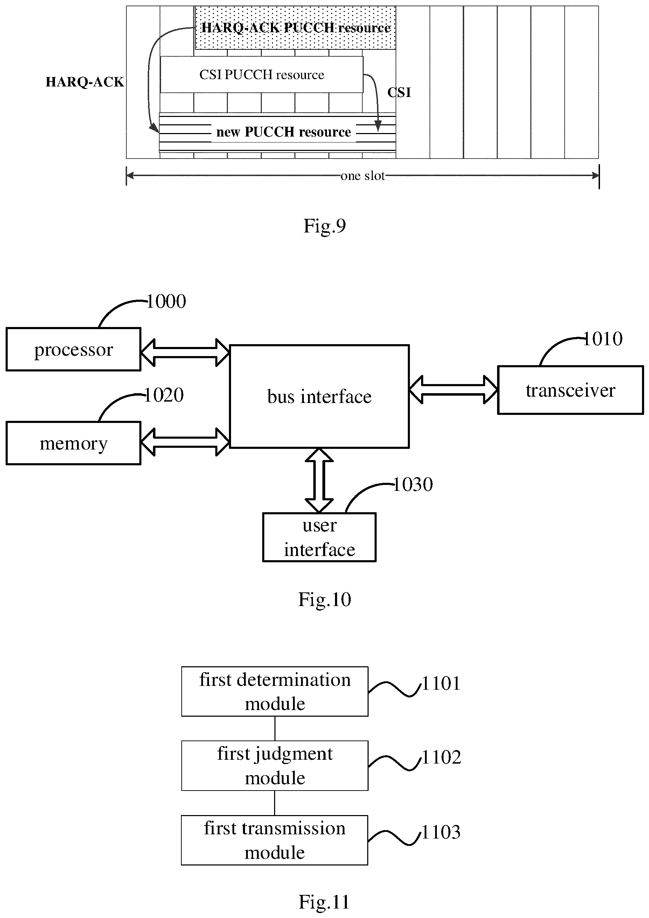

Second embodiment: as shown in Figs.8 and 9, it is presumed that there exist two PUCCHs within one slot, and different PUCCHs carry different types of UCI. When it is determined, in accordance with such information as a format of DCI for scheduling downlink transmission, a DCI size, a search space where the transmission is performed, a COREST where the transmission is performed, a beam used for the transmission or an RNTI used for the transmission, that the downlink transmission corresponds to a URLLC service or has a higher priority level, it may be determined that the HARQ-ACK for the downlink transmission is first UCI, i.e., UCI having a higher priority level. Identically, when it is determined, in accordance with a configuration of a PUCCH resource or a configuration of CSI, that the CSI corresponds to eMBB or has a lower priority level, it may be determined that the CSI is second UCI, i.e., UCI having a lower priority level.

It is presumed that a plurality of PUCCH resource sets has been configured, i.e., there is a resource that can carry a large quantity of bits in the PUCCH resources. Because the PUCCHs overlap each other in a time domain, one PUCCH resource set may be selected in accordance with a sum of the quantity of bits of the HARQ-ACK and the CSI on the basis of the UCI multiplexing transmission rule, and then one PUCCH resource in the PUCCH resource set may be determined in accordance with a PUCCH resource indication field in the DCI for scheduling the downlink transmission corresponding to the HARQ-ACK, so as to carry the HARQ-ACK and the CSI, i.e., the new PUCCH resource may be determined as a PUCCH resource for multiplexing transmission of the HARQ-ACK and the CSI.

The terminal needs to make judgment as follows. The terminal may judge whether a last symbol of the new PUCCH resource is later than a last symbol of an original PUCCH resource corresponding to the HARQ-ACK by T symbols, e.g., by two symbols. When a judgment result is yes, as shown in Fig.8, the CSI may not be transmitted (i.e., the CSI may be dropped), and the HARQ-ACK may be transmitted on the original PUCCH resource carrying the HARQ-ACK, so as to not increase the transmission delay of the UCI having a higher priority level. When the judgment result is no, as shown in Fig.9, the HARQ-ACK and the CSI may be transmitted simultaneously on the new PUCCH resource.

It should be noted that, any other judgment modes, e.g., judging whether a first symbol of the new PUCCH resource is later than a first symbol of the original PUCCH resource corresponding to the HARQ-ACK by T symbols, or judging whether the first symbol of the new PUCCH resource is later than the last symbol of the original PUCCH resource corresponding to the HARQ-ACK by T symbols, or judging whether the last symbol of the new PUCCH resource is later than the first symbol of the original PUCCH resource corresponding to the HARQ-ACK by T symbols, and replacing the T symbols with a corresponding time length, e.g., T1 milliseconds, may have a same principle as the above-mentioned judgment mode, and thus will not be particularly further defined herein. A consistent judgment mode for the terminal and the base station may be pre-agreed or specified in a protocol.

Through a same judgment method used by the terminal, the base station may judge whether the last symbol of the new PUCCH resource is later than the last symbol of the PUCCH resource corresponding to the HARQ-ACK by T symbols, and determine whether the HARQ-ACK and the CSI are to be transmitted simultaneously on the new PUCCH resource in accordance with a judgment result. If not, the HARQ-ACK may be received merely on the PUCCH resource corresponding to the HARQ-ACK, and the CSI may be dropped, i.e., may not be received. If yes, the base station may receive the HARQ-ACK and the CSI simultaneously on the new PUCCH resource.

In the above embodiments, the description has been given by taking the transmission of the UCI on the PUCCH as an example. When the UCI is transmitted on a PUSCH, or when one piece of UCI is transmitted on the PUCCH and another piece of UCI is transmitted on the PUSCH, the method may also be applied. In addition, the above embodiments, the description has been given when the first UCI and the second UCI are of different types. However, when the first UCI and the second UCI are each an HARQ-ACK, CSI or an SR, the method may also be applied.

According to the information transmission method in the embodiments of the present disclosure, when the transmission resource for the first UCI overlap that for the second UCI in the time domain, whether to transmit the first UCI and the second UCI on a multiplexing transmission resource or to drop one type of the UCI may be determined in accordance with a position of the multiplexing transmission resource relative to the original transmission resource for the UCI, so as to ensure the low transmission delay of the UCI.

As shown in Fig. 10, the present disclosure further provides in some embodiments a terminal, which includes a transceiver, a memory, a processor, and a program stored in the memory and executed by the processor. The processor is configured to execute the program so as to: in the case that a first uplink channel carrying first UCI overlaps a second uplink channel carrying second UCI in a time domain, determine a third uplink channel for multiplexing transmission of the first UCI and the second UCI; judge whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, drop the second UCI, and transmit the first UCI on the first uplink channel.

In Fig. 10, bus architecture may include a number of buses and bridges connected to each other, so as to connect various circuits for one or more processors represented by the processor 1000 and one or more memories represented by the memory 1020. In addition, as is known in the art, the bus architecture may be used to connect any other circuits, such as a circuit for a peripheral device, a circuit for a voltage stabilizer and a power management circuit, which are not particularly further defined herein. A bus interface may be provided, and the transceiver 1010 may consist of a plurality of elements, i.e., a transmitter and a receiver for communication with any other devices over a transmission medium. With respect to different UEs, a user interface 1030 may also be provided for devices which are to be arranged inside or outside the UE, and these devices may include but not limited to a keypad, a display, a speaker, a microphone and a joystick.

The processor 1000 may take charge of managing the bus architecture as well as general processings. The memory 1020 may store therein data for the operation of the processor 1000. In a possible embodiment of the present disclosure, the processor 1000 is further configured to execute the program in the memory 1020, so as to, when it is judged that the starting position and/or the ending position of the third uplink channel is not later than the starting position and/or the ending position of the first uplink channel by the predetermined time, transmit the first UCI and the second UCI on the third uplink channel, or transmit the first UCI on the third uplink channel.

In a possible embodiment of the present disclosure, the third uplink channel may be the first uplink channel or the second uplink channel, or the third uplink channel may be an uplink channel other than the first uplink channel and the second uplink channel.

In a possible embodiment of the present disclosure, the first UCI may be of a type identical to or different from the second UCI.

In a possible embodiment of the present disclosure, the first UCI may have a priority level or a significance level higher than the second UCI; or the first UCI may be UCI corresponding to a first service type, the second UCI may be UCI corresponding to a second service type, and the first service type may have a priority level or a significance level higher than the second service type; or the first UCI and the second UCI may have different priority levels or significance levels in a same service type.

In a possible embodiment of the present disclosure, the priority levels of the first service type and the second service type may be determined in accordance with target information, or the priority levels of the first UCI and the second UCI may be determined in accordance with the target information. The target information may include at least one of a DCI format, a DCI size, a search space, a CORESET, a beam, an RNTI, an MCS or CQI table, a target BLER, and a priority level identity.

In a possible embodiment of the present disclosure, the third uplink channel may be at least one of a PUCCH or a PUSCH.

In a possible embodiment of the present disclosure, the predetermined time may be a first predetermined quantity of OFDM symbols, a time length corresponding to the first predetermined quantity of OFDM symbols, or a duration corresponding to a second predetermined quantity of time units.

According to the terminal in the embodiments of the present disclosure, in the case that the first uplink channel carrying the first UCI overlaps the second uplink channel carrying the second UCI in the time domain, the third uplink channel for multiplexing transmission of the first UCI and the second UCI may be determined. Whether the starting position and/or the ending position of the third uplink channel is later than the starting position and/or the ending position of the first uplink channel by the predetermined time may be judged. When the judgment result is yes, the second UCI may be dropped and the first UCI may be transmitted on the first uplink channel. As a result, it is able to ensure the transmission delay of the UCI with a high priority level or a high significance level.

The present disclosure further provides in some embodiments a computer-readable storage medium storing therein a computer program. The computer program is executed by a processor so as to: in the case that a first uplink channel carrying first UCI overlaps a second uplink channel carrying second UCI in a time domain, determine a third uplink channel for multiplexing transmission of the first UCI and the second UCI; judge whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, drop the second UCI, and transmit the first UCI on the first uplink channel.

The program is executed by the processor so as to implement the above-mentioned information transmission method for the terminal with a same technical effect, which will not be particularly further defined herein.

As shown in Fig. 11, the present disclosure further provides in some embodiments a terminal, which includes: a first determination module 1101 configured to, in the case that a first uplink channel carrying first UCI overlaps a second uplink channel carrying second UCI in a time domain, determine a third uplink channel for multiplexing transmission of the first UCI and the second UCI; a first judgment module 1102 configured to judge whether a starting position and/or an ending position of the third uplink channel is later than a starting position and/or an ending position of the first uplink channel by a predetermined time; and a first transmission module 1103 configured to, when the first judgment module judges that the starting position and/or the ending position of the third uplink channel is later than the starting position and/or the ending position of the first uplink channel by the predetermined time, drop the second UCI, and transmit the first UCI on the first uplink channel.

The terminal may further include a second transmission module configured to, when the first judgment module judges that the starting position and/or the ending position of the third uplink channel is not later than the starting position and/or the ending position of the first uplink channel by the predetermined time, transmit the first UCI and the second UCI on the third uplink channel, or transmit the first UCI on the third uplink channel.

In a possible embodiment of the present disclosure, the third uplink channel may be the first uplink channel or the second uplink channel, or the third uplink channel may be an uplink channel other than the first uplink channel and the second uplink channel.

In a possible embodiment of the present disclosure, the first UCI may be of a type identical to or different from the second UCI.

In a possible embodiment of the present disclosure, the first UCI may have a priority level or a significance level higher than the second UCI; or the first UCI may be UCI corresponding to a first service type, the second UCI may be UCI corresponding to a second service type, and the first service type may have a priority level or a significance level higher than the second service type; or the first UCI and the second UCI may have different priority levels or significance levels in a same service type.

In a possible embodiment of the present disclosure, the priority levels of the first service type and the second service type may be determined in accordance with target information, or the priority levels of the first UCI and the second UCI may be determined in accordance with the target information. The target information may include at least one of a DCI format, a DCI size, a search space, a CORESET, a beam, an RNTI, an MCS or CQI table, a target BLER, and a priority level identity.

In a possible embodiment of the present disclosure, the third uplink channel may be at least one of a PUCCH or a PUSCH.

In a possible embodiment of the present disclosure, the predetermined time may be a first predetermined quantity of OFDM symbols, a time length corresponding to the first predetermined quantity of OFDM symbols, or a duration corresponding to a second predetermined quantity of time units.

According to the terminal in the embodiments of the present disclosure, in the case that the first uplink channel carrying the first UCI overlaps the second uplink channel carrying the second UCI in the time domain, the third uplink channel for multiplexing transmission of the first UCI and the second UCI may be determined. Whether the starting position and/or the ending position of the third uplink channel is later than the starting position and/or the ending position of the first uplink channel by the predetermined time may be judged. When the judgment result is yes, the second UCI may be dropped, and the first UCI may be transmitted on the first uplink channel. As a result, it is able to ensure the transmission delay of the UCI with a high priority level or a high significance level.

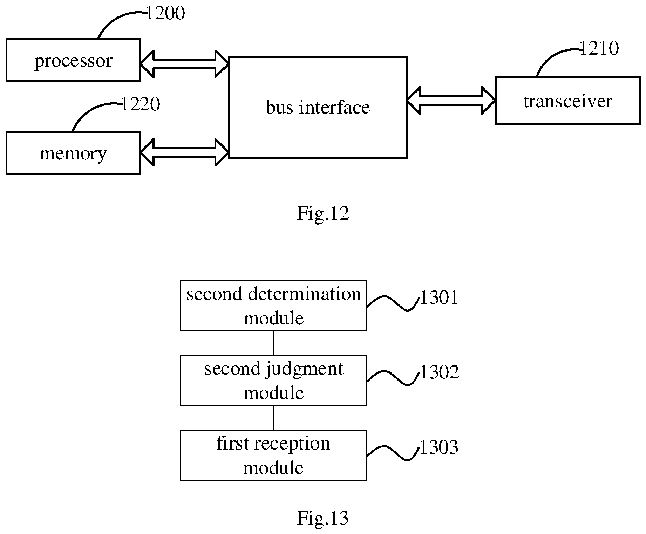

As shown in Fig. 12, the present disclosure further provides in some embodiments a network device, e.g., a base station, which includes a memory 1220, a processor 1200, a transceiver 1210, a bus interface, and a computer program stored in the memory 1220 and executed by the processor 1200. The processor 1200 is configured to read the program in the memory 122, so as to: in the case that a first uplink channel carrying first UCI overlaps a second uplink channel carrying second UCI in a time domain, determine a third uplink channel for multiplexing transmission of the first UCI and the second UCI; judge whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, not receive the second UCI, and receive the first UCI on the first uplink channel.

In Fig.12, bus architecture may include a number of buses and bridges connected to each other, so as to connect various circuits for one or more processors represented by the processor 1200 and one or more memories represented by the memory 1220. In addition, as is known in the art, the bus architecture may be used to connect any other circuits, such as a circuit for a peripheral device, a circuit for a voltage stabilizer and a power management circuit, which are not particularly further defined herein. The bus interface may be provided, and the transceiver 1210 may consist of a plurality of elements, i.e., a transmitter and a receiver for communication with any other devices over a transmission medium. The processor 1200 may take charge of managing the bus architecture as well as general processings. The memory 1220 may store therein data for the operation of the processor 1200.

In a possible embodiment of the present disclosure, the processor 1200 is further configured to execute the program to, when it is judged that the starting position and/or the ending position of the third uplink channel is not later than the starting position and/or the ending position of the first uplink channel by the predetermined time, receive the first UCI and the second UCI on the third uplink channel, or receive the first UCI on the third uplink channel.

In a possible embodiment of the present disclosure, the third uplink channel may be the first uplink channel or the second uplink channel, or the third uplink channel may be an uplink channel other than the first uplink channel and the second uplink channel.

In a possible embodiment of the present disclosure, the first UCI may be of a type identical to or different from the second UCI.

In a possible embodiment of the present disclosure, the first UCI may have a priority level or a significance level higher than the second UCI; or the first UCI may be UCI corresponding to a first service type, the second UCI may be UCI corresponding to a second service type, and the first service type may have a priority level or a significance level higher than the second service type; or the first UCI and the second UCI may have different priority levels or significance levels in a same service type.

In a possible embodiment of the present disclosure, the priority levels of the first service type and the second service type may be determined in accordance with target information, or the priority levels of the first UCI and the second UCI may be determined in accordance with the target information. The target information may include at least one of a DCI format, a DCI size, a search space, a CORESET, a beam, an RNTI, an MCS or CQI table, a target BLER, and a priority level identity.

In a possible embodiment of the present disclosure, the third uplink channel may be at least one of a PUCCH or a PUSCH.

In a possible embodiment of the present disclosure, the predetermined time may be a first predetermined quantity of OFDM symbols, a time length corresponding to the first predetermined quantity of OFDM symbols, or a duration corresponding to a second predetermined quantity of time units.

According to the network device in the embodiments of the present disclosure, in the case that the first uplink channel carrying the first UCI overlaps the second uplink channel carrying the second UCI in the time domain, the third uplink channel for multiplexing transmission of the first UCI and the second UCI may be determined. Whether the starting position and/or the ending position of the third uplink channel is later than the starting position and/or the ending position of the first uplink channel by the predetermined time may be judged. When the judgment result is yes, the second UCI may not be received and the first UCI may be received on the first uplink channel. As a result, it is able to ensure the transmission delay of the UCI with a high priority level or a high significance level.

The present disclosure further provides in some embodiments a computer-readable storage medium storing therein a computer program. The computer program is executed by a processor, so as to: in the case that a first uplink channel carrying first UCI overlaps a second uplink channel carrying second UCI in a time domain, determine a third uplink channel for multiplexing transmission of the first UCI and the second UCI; judge whether a starting position and/or an ending position of the third uplink channel is later than a starting position and/or an ending position of the first uplink channel by a predetermined time; and when it is judged that the starting position and/or the ending position of the third uplink channel is later than the starting position and/or the ending position of the first uplink channel by the predetermined time, not receive the second UCI, and receive the first UCI on the first uplink channel.

The program is executed by the processor so as to implement the above-mentioned information transmission method for the network device with a same technical effect, which will not be particularly further defined herein.

As shown in Fig. 13, the present disclosure further provides in some embodiments a network device, which includes: a second determination module 1301 configured to, in the case that a first uplink channel carrying first UCI overlaps a second uplink channel carrying second UCI in a time domain, determining a third uplink channel for multiplexing transmission of the first UCI and the second UCI; a second judgment module 1302 configured to judge whether a starting position and/or an ending position of the third uplink channel is later than a starting position and/or an ending position of the first uplink channel by a predetermined time; and a first reception module 1303 configured to, when the second judgment module judges that the starting position and/or the ending position of the third uplink channel is later than the starting position and/or the ending position of the first uplink channel by the predetermined time, not receive the second UCI, and receive the first UCI on the first uplink channel.

The network device may further include a second reception module configured to, when the second judgment module judges that the starting position and/or the ending position of the third uplink channel is not later than the starting position and/or the ending position of the first uplink channel by the predetermined time, receive the first UCI and the second UCI on the third uplink channel, or receive the first UCI on the third uplink channel.

In a possible embodiment of the present disclosure, the third uplink channel may be the first uplink channel or the second uplink channel, or the third uplink channel may be an uplink channel other than the first uplink channel and the second uplink channel.

In a possible embodiment of the present disclosure, the first UCI may be of a type identical to or different from the second UCI.

In a possible embodiment of the present disclosure, the first UCI may have a priority level or a significance level higher than the second UCI; or the first UCI may be UCI corresponding to a first service type, the second UCI may be UCI corresponding to a second service type, and the first service type may have a priority level or a significance level higher than the second service type; or the first UCI and the second UCI may be UCI having different priority levels or significance levels in a same service type.

In a possible embodiment of the present disclosure, the priority levels of the first service type and the second service type may be determined in accordance with target information, or the priority levels of the first UCI and the second UCI may be determined in accordance with the target information. The target information may include at least one of a DCI format, a DCI size, a search space, a CORESET, a beam, an RNTI, an MCS or CQI table, a target BLER, and a priority level identity.

In a possible embodiment of the present disclosure, the third uplink channel may be at least one of a PUCCH or a PUSCH.

In a possible embodiment of the present disclosure, the predetermined time may be a first predetermined quantity of OFDM symbols, a time length corresponding to the first predetermined quantity of OFDM symbols, or a duration corresponding to a second predetermined quantity of time units.

According to the network device in the embodiments of the present disclosure, in the case that the first uplink channel carrying the first UCI overlaps the second uplink channel carrying the second UCI in the time domain, the third uplink channel for multiplexing transmission of the first UCI and the second UCI may be determined. Whether the starting position and/or the ending position of the third uplink channel is later than the starting position and/or the ending position of the first uplink channel by the predetermined time may be judged. When the judgment result is yes, the second UCI may not be received and the first UCI may be received on the first uplink channel. As a result, it is able to ensure the transmission delay of the UCI with a high priority level or a high significance level.

It should be further appreciated that, serial numbers of the steps shall not be used to define the order of the steps, and instead, the order of the steps shall be determined in accordance with their functions and internal logics, which does not limit the implementations of the embodiments of the present disclosure.

It should be appreciated that, the embodiments of the present disclosure may be implemented by hardware, software, firmware, middleware, microcode or a combination thereof. For the hardware implementation, the processor may include one or more of an Application Specific Integrated Circuit (ASIC), a Digital Signal Processor (DSP), a DSP device (DSPD), a Programmable Logic Device (PLD), a Field-Programmable Gate Array (FPGA), a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

The above are optional implementations of the present disclosure. It should be noted that a person skilled in the art may make further modifications and improvements without departing from the spirit of the present disclosure, and these modifications and improvements shall also fall within the scope of the present disclosure.

## Claims

1. An information transmission method for a terminal, comprising:
in the case that a first uplink channel carrying first Uplink Control Information (UCI) overlaps a second uplink channel carrying second UCI in time domain, determining a third uplink channel for multiplexing transmission of the first UCI and the second UCI;
judging whether a starting position and/or an ending position of the third uplink channel is later than a starting position and/or an ending position of the first uplink channel by a predetermined time; and
when it is judged that the starting position and/or the ending position of the third uplink channel is later than the starting position and/or the ending position of the first uplink channel by the predetermined time, dropping the second UCI, and transmitting the first UCI on the first uplink channel.

2. The information transmission method according to claim 1, wherein subsequent to judging whether the starting position and/or the ending position of the third uplink channel is later than the starting position and/or the ending position of the first uplink channel by the predetermined time, the information transmission method further comprises:
when it is judged that the starting position and/or the ending position of the third uplink channel is not later than the starting position and/or the ending position of the first uplink channel by the predetermined time, transmitting the first UCI and the second UCI on the third uplink channel, or transmitting the first UCI on the third uplink channel.

3. The information transmission method according to claim 1, wherein the third uplink channel is the first uplink channel or the second uplink channel, or
the third uplink channel is an uplink channel other than the first uplink channel and the second uplink channel.

4. The information transmission method according to claim 1, wherein a type of the first UCI is same as or different from a type of the second UCI.

5. The information transmission method according to claim 1, wherein a priority level of the first UCI is higher than a priority level of the second UCI, or a significance level of the first UCI is higher than a significance level of the second UCI; or
the first UCI is UCI corresponding to a first service type, the second UCI is UCI corresponding to a second service type, and a priority level of the first service type is higher than a priority level of the second service type or a significance level of the first service type is higher than a significance level of the second service type; or
the first UCI and the second UCI have different priority levels or significance levels in a same service type.

6. The information transmission method according to claim 5, wherein the priority levels of the first service type and the second service type are determined in accordance with target information, or the priority levels of the first UCI and the second UCI are determined in accordance with target information;
the target information comprises at least one of:
a Downlink Control Information (DCI) format, a DCI size, a search space, a Control Resource Set (CORESET), a beam, a Radio Network Temporary Identity (RNTI), a Modulation and Coding Scheme (MCS) or Channel Quality Indicator (CQI) table, a target Block Error Rate (BLER), and a priority level identity.

7. The information transmission method according to claim 1, wherein the third uplink channel is at least one of a Physical Uplink Control Channel (PUCCH) or a Physical Uplink Shared Channel (PUSCH).

8. The information transmission method according to claim 1, wherein the predetermined time is a first predetermined quantity of Orthogonal Frequency Division Multiplexing (OFDM) symbols; or
the predetermined time is a time length corresponding to the first predetermined quantity of OFDM symbols; or
the predetermined time is a duration corresponding to a second predetermined quantity of time units.

9. An information transmission method for a network device, comprising:
in the case that a first uplink channel carrying first Uplink Control Information (UCI) overlaps a second uplink channel carrying second UCI in time domain, determining a third uplink channel for multiplexing transmission of the first UCI and the second UCI;
judging whether a starting position and/or an ending position of the third uplink channel is later than a starting position and/or an ending position of the first uplink channel by a predetermined time; and
when it is judged that the starting position and/or the ending position of the third uplink channel is later than the starting position and/or the ending position of the first uplink channel by the predetermined time, not receiving the second UCI, and receiving the first UCI on the first uplink channel.

10. The information transmission method according to claim 9, wherein subsequent to judging whether the starting position and/or the ending position of the third uplink channel is later than the starting position and/or the ending position of the first uplink channel by the predetermined time, the information transmission method further comprises:
when it is judged that the starting position and/or the ending position of the third uplink channel is not later than the starting position and/or the ending position of the first uplink channel by the predetermined time, receiving the first UCI and the second UCI on the third uplink channel, or receiving the first UCI on the third uplink channel.

11. The information transmission method according to claim 9, wherein the third uplink channel is the first uplink channel or the second uplink channel, or
the third uplink channel is an uplink channel other than the first uplink channel and the second uplink channel.

12. The information transmission method according to claim 9, wherein a type of the first UCI is same as or different from a type of the second UCI.

13. The information transmission method according to claim 9, wherein a priority level of the first UCI is higher than a priority level of the second UCI, or a significance level of the first UCI is higher than a significance level of the second UCI; or
the first UCI is UCI corresponding to a first service type, the second UCI is UCI corresponding to a second service type, and a priority level of the first service type is higher than a priority level of the second service type or a significance level of the first service type is higher than a significance level of the second service type; or
the first UCI and the second UCI have different priority levels or significance levels in a same service type.

14. The information transmission method according to claim 13, wherein the priority levels of the first service type and the second service type are determined in accordance with target information, or the priority levels of the first UCI and the second UCI are determined in accordance with target information;
the target information comprises at least one of:
a Downlink Control Information (DCI) format, a DCI size, a search space, a Control Resource Set (CORESET), a beam, a Radio Network Temporary Identity (RNTI), a Modulation and Coding Scheme (MCS) or Channel Quality Indicator (CQI) table, a target Block Error Rate (BLER), and a priority level identity.

15. The information transmission method according to claim 9, wherein the third uplink channel is at least one of a Physical Uplink Control Channel (PUCCH) or a Physical Uplink Shared Channel (PUSCH).

16. The information transmission method according to claim 9, wherein the predetermined time is a first predetermined quantity of Orthogonal Frequency Division Multiplexing (OFDM) symbols; or
the predetermined time is a time length corresponding to the first predetermined quantity of OFDM symbols; or
the predetermined time is a duration corresponding to a second predetermined quantity of time units.

17. A terminal, comprising a transceiver, a memory, a processor, and a program stored in the memory and executable by the processor, wherein the processor is configured to execute the program to:
in the case that a first uplink channel carrying first Uplink Control Information (UCI) overlaps a second uplink channel carrying second UCI in time domain, determine a third uplink channel for multiplexing transmission of the first UCI and the second UCI;
judge whether a starting position and/or an ending position of the third uplink channel is later than a starting position and/or an ending position of the first uplink channel by a predetermined time; and
when it is judged that the starting position and/or the ending position of the third uplink channel is later than the starting position and/or the ending position of the first uplink channel by the predetermined time, drop the second UCI, and transmit the first UCI on the first uplink channel.

18. The terminal according to claim 17, wherein the processor is further configured to execute the program to,
when it is judged that the starting position and/or the ending position of the third uplink channel is not later than the starting position and/or the ending position of the first uplink channel by the predetermined time, transmit the first UCI and the second UCI on the third uplink channel, or transmit the first UCI on the third uplink channel.

19. The terminal according to claim 17, wherein the third uplink channel is the first uplink channel or the second uplink channel, or
the third uplink channel is an uplink channel other than the first uplink channel and the second uplink channel.

20. The terminal according to claim 17, wherein a type of the first UCI is same as or different from a type of the second UCI.

21. The terminal according to claim 17, wherein a priority level of the first UCI is higher than a priority level of the second UCI, or a significance level of the first UCI is higher than a significance level of the second UCI; or
the first UCI is UCI corresponding to a first service type, the second UCI is UCI corresponding to a second service type, and a priority level of the first service type is higher than a priority level of the second service type or a significance level of the first service type is higher than a significance level of the second service type; or
the first UCI and the second UCI have different priority levels or significance levels in a same service type.

22. The terminal according to claim 21, wherein the priority levels of the first service type and the second service type are determined in accordance with target information, or the priority levels of the first UCI and the second UCI are determined in accordance with target information;
the target information comprises at least one of:
a Downlink Control Information (DCI) format, a DCI size, a search space, a Control Resource Set (CORESET), a beam, a Radio Network Temporary Identity (RNTI), a Modulation and Coding Scheme (MCS) or Channel Quality Indicator (CQI) table, a target Block Error Rate (BLER), and a priority level identity.

23. The terminal according to claim 17, wherein the third uplink channel is at least one of a Physical Uplink Control Channel (PUCCH) or a Physical Uplink Shared Channel (PUSCH).

24. The terminal according to claim 17, wherein the predetermined time is a first predetermined quantity of Orthogonal Frequency Division Multiplexing (OFDM) symbols; or
the predetermined time is a time length corresponding to the first predetermined quantity of OFDM symbols; or
the predetermined time is a duration corresponding to a second predetermined quantity of time units.

25. A computer-readable storage medium storing therein a computer program, wherein the computer program is configured to be executed by a processor to implement the information transmission method according to any one of claims 1 to 8.

26. A network device, comprising a transceiver, a memory, a processor, and a program stored in the memory and executable by the processor, wherein the processor is configured to execute the program to:
in the case that a first uplink channel carrying first Uplink Control Information (UCI) overlaps a second uplink channel carrying second UCI in time domain, determine a third uplink channel for multiplexing transmission of the first UCI and the second UCI;
judge whether a starting position and/or an ending position of the third uplink channel is later than a starting position and/or an ending position of the first uplink channel by a predetermined time; and
when it is judged that the starting position and/or the ending position of the third uplink channel is later than the starting position and/or the ending position of the first uplink channel by the predetermined time, not receive the second UCI, and receive the first UCI on the first uplink channel.

27. The network device according to claim 26, wherein the processor is further configured to execute the program to,
when it is judged that the starting position and/or the ending position of the third uplink channel is not later than the starting position and/or the ending position of the first uplink channel by the predetermined time, receive the first UCI and the second UCI on the third uplink channel, or receive the first UCI on the third uplink channel.

28. The network device according to claim 26, wherein the third uplink channel is the first uplink channel or the second uplink channel, or
the third uplink channel is an uplink channel other than the first uplink channel and the second uplink channel.

29. The network device according to claim 26, wherein a type of the first UCI is same as or different from a type of the second UCI.

30. The network device according to claim 26, wherein a priority level of the first UCI is higher than a priority level of the second UCI, or a significance level of the first UCI is higher than a significance level of the second UCI; or
the first UCI is UCI corresponding to a first service type, the second UCI is UCI corresponding to a second service type, and a priority level of the first service type is higher than a priority level of the second service type or a significance level of the first service type is higher than a significance level of the second service type; or
the first UCI and the second UCI have different priority levels or significance levels in a same service type.

31. The network device according to claim 30, wherein the priority levels of the first service type and the second service type are determined in accordance with target information, or the priority levels of the first UCI and the second UCI are determined in accordance with target information;
the target information comprises at least one of:
a Downlink Control Information (DCI) format, a DCI size, a search space, a Control Resource Set (CORESET), a beam, a Radio Network Temporary Identity (RNTI), a Modulation and Coding Scheme (MCS) or Channel Quality Indicator (CQI) table, a target Block Error Rate (BLER), and a priority level identity.

32. The network device according to claim 26, wherein the third uplink channel is at least one of a Physical Uplink Control Channel (PUCCH) or a Physical Uplink Shared Channel (PUSCH).

33. The network device according to claim 26, wherein the predetermined time is a first predetermined quantity of Orthogonal Frequency Division Multiplexing (OFDM) symbols; or
the predetermined time is a time length corresponding to the first predetermined quantity of OFDM symbols; or
the predetermined time is a duration corresponding to a second predetermined quantity of time units.

34. A computer-readable storage medium storing therein a computer program, wherein the computer program is configured to be executed by a processor to implement the information transmission method according to any one of claims 9 to 16.

35. A terminal, comprising:
a first determination module configured to, in the case that a first uplink channel carrying first Uplink Control Information (UCI) overlaps a second uplink channel carrying second UCI in time domain, determine a third uplink channel for multiplexing transmission of the first UCI and the second UCI;
a first judgment module configured to judge whether a starting position and/or an ending position of the third uplink channel is later than a starting position and/or an ending position of the first uplink channel by a predetermined time; and
a first transmission module configured to, when the first judgment module judges that the starting position and/or the ending position of the third uplink channel is later than the starting position and/or the ending position of the first uplink channel by the predetermined time, drop the second UCI, and transmit the first UCI on the first uplink channel.

36. The terminal according to claim 35, further comprising a second transmission module configured to, when the first judgment module judges that the starting position and/or the ending position of the third uplink channel is not later than the starting position and/or the ending position of the first uplink channel by the predetermined time, transmit the first UCI and the second UCI on the third uplink channel, or transmit the first UCI on the third uplink channel.

37. A network device, comprising:
a second determination module configured to, in the case that a first uplink channel carrying first Uplink Control Information (UCI) overlaps a second uplink channel carrying second UCI in time domain, determine a third uplink channel for multiplexing transmission of the first UCI and the second UCI;
a second judgment module configured to judge whether a starting position and/or an ending position of the third uplink channel is later than a starting position and/or an ending position of the first uplink channel by a predetermined time; and
a first reception module configured to, when the second judgment module judges that the starting position and/or the ending position of the third uplink channel is later than the starting position and/or the ending position of the first uplink channel by the predetermined time, not receive the second UCI, and receive the first UCI on the first uplink channel.

38. The network device according to claim 37, further comprising:
a second reception module configured to, when the second judgment module judges that the starting position and/or the ending position of the third uplink channel is not later than the starting position and/or the ending position of the first uplink channel by the predetermined time, receive the first UCI and the second UCI on the third uplink channel, or receive the first UCI on the third uplink channel.
